# FASCICULE DE BREVET EUROPEEN

(11) **EP 0 999 632 B1**
(45) Date de publication et mention de la délivrance du brevet: **29.01.2003**
(21) Numéro de dépôt: 99440299.8
(22) Date de dépôt: 03.11.1999
(51) Int. Cl.: H02H 7/08

(54) **Dispositif de commande d'arret du fonctionnement d'un moteur asynchrone monophasé à condensateur**
Vorrichtung zum Anhalten einer einphasigen Asynchronmaschine mit Kondensator
Stop control device for single-phase asynchronous motor with capacitor

(30) Priorité: 03.11.1998 FR 9813907
(43) Date de publication de la demande: 10.05.2000
(73) Titulaire: Bubendorff Volet Roulant Société Anonyme, 68300 Saint-Louis (FR)
(72) Inventeur: Raude, Philippe, 56100 Lorient (FR); Mansouri, Abdelkader, 68330 Huningue (FR)
(74) Mandataire: Rhein, Alain

(56) Documents cités:
- FR-A- 2 749 714
- FR-A- 2 753 847

## Description

L'invention a trait à un dispositif de commande d'arrêt du fonctionnement d'un moteur asynchrone monophasé à condensateur, notamment pour système de fermeture de type volet roulant, comportant des moyens de mesure du déphasage de la tension U1 d'alimentation du moteur et de la tension U2 aux bornes du condensateur, ainsi que des moyens de commande d'arrêt à même de couper l'alimentation du moteur en cas de détection d'un déphasage déterminé.

La présente invention concerne, plus particulièrement, le domaine des moteurs d'entraînement pour systèmes d'ouverture, tels que volets roulants, stores, portails ou analogues.

Il est d'ores et déjà connu au travers d'un certain nombre de documents des dispositifs permettant de maintenir sous contrôle la charge d'un moteur asynchrone monophasé à condensateur en vue d'en assurer l'arrêt en cas de dépassement d'une charge déterminée, mais aussi en cas de variation instantanée de cette charge supérieure à un seuil défini.

A ce propos, on se reportera, tout particulièrement, au document EP-A-0.720.269 où il est question d'un tel dispositif. Celui-ci se distingue en ce qu'il comporte, d'une part, des moyens de mesure du déphasage entre l'un quelconque des paramètres, tension ou courant, de la phase principale correspondant au bobinage principal du moteur ou de la phase secondaire correspondant au bobinage auxiliaire et un autre de ces paramètres et, d'autre part, des moyens de commande d'arrêt à même de couper l'alimentation du moteur en cas de mesure d'un temps de retard inférieur à une valeur seuil en mémoire.

Dans la partie introductive de ce document, exposant l'état antérieur de la technique, il a été rappelé qu'il était également connu par un brevet américain n° 5.151.638 un dispositif à même de détecter qu'un moteur fonctionne dans des conditions de surcharge. Ce dispositif examine, en fait, l'évolution de l'angle du déphasage entre la tension et le courant total aux bornes du moteur. Ainsi, selon ce dispositif connu, il est prévu de détecter le passage à zéro de cette tension et du courant, des moyens appropriés étant, alors, à même d'émettre un signal représentatif du temps de retard de l'un par rapport à l'autre. Tout particulièrement, il est utilisé, ici, un tore ferromagnétique pour détecter le passage à zéro du courant.

En fait, s'il existe bel et bien une relation entre, d'une part, le déphasage de la tension secteur et le courant total traversant le moteur et, d'autre part, la charge de ce dernier, il ne s'agit pas, de façon systématique, d'une relation de proportionnalité. De plus, cette relation est strictement dépendante des caractéristiques du moteur. Cela signifie que de tels dispositifs doivent être réglés en fonction du moteur commandé, qui plus est, au travers d'opérations laborieuses de tests et autres.

En fait, l'invention telle que décrite dans le document EP-A-0.720.269 avait pour but de répondre à ce problème au travers d'un dispositif de commande d'arrêt dont le fonctionnement est quasiment indépendant des paramètres du moteur, telles que la capacité du condensateur de déphasage ou encore la température du fonctionnement de ce moteur. En fait, il a été imaginé, dans ce cas, de mesurer le temps de retard, non pas entre la tension aux bornes du moteur et le courant total traversant ce dernier, mais entre les paramètres de tension ou courant correspondant à la phase principale et/ou à la phase auxiliaire de ce moteur.

Tout particulièrement, l'on a pu observer qu'en tenant compte de paramètres intérieurs au moteur et non, simplement, de ceux susceptibles d'être prélevés sur les câbles d'alimentation de ce dernier, l'on obtenait une réelle relation de proportionnalité entre la mesure de déphasage effectuée et la charge appliquée au moteur.

En fait, l'exemple de réalisation plus particulièrement décrit et représenté dans les figures de ce document EP-A-0.720.269, concerne un dispositif faisant appel à la mesure de déphasage de la tension aux bornes du moteur par rapport au courant traversant le bobinage principal de ce dernier.

Or, s'il est assez facile, donc peu onéreux, de détecter le passage à zéro d'une tension alternative, la détection du passage à zéro d'un courant mérite une attention plus particulière. Ainsi, on a fait appel, dans ce document EP-0.720.269, à un optocoupleur qui, s'il présente l'avantage de procurer une isolation galvanique entre l'alimentation secteur et l'alimentation de composants électroniques, tels qu'un microprocesseur, n'en constitue pas moins un composant onéreux.

Par ailleurs, l'expérience a démontré que si la solution, telle que révélée dans ce document EP-0.720.269, permettait, effectivement, de s'affranchir au moins en partie des paramètres spécifiques au moteur ou encore de la température de fonctionnement de ce dernier, elle n'en était pas moins insensible aux variations brutales de la tension du secteur. C'est ainsi que l'on a pu s'apercevoir que dans le cadre d'une habitation munie d'un ensemble de volets roulants motorisés, par ailleurs, pourvus d'un dispositif de commande d'arrêt fonctionnant selon le principe évoqué dans ce document EP-0.720.269, il se produisait des arrêts intempestifs de ces volets roulants en cas de variation brutale de la tension secteur résultant, par exemple, de la mise en route d'un système de chauffage électrique ou autre appareillage électrique d'une certaine puissance.

Comme il ressort, en outre, de ce document antérieur, il était utile, jusqu'à présent, de tenir compte, non seulement, d'une variation brutale ou anormale du déphasage pour détecter une surcharge du moteur, mais aussi d'un seuil maximum qui, s'il était dépassé, engendrait, à son tour, l'arrêt du moteur. Une telle précaution est tout particulièrement nécessaire dans le cadre d'une application du dispositif à des moteurs d'entraînement de volets roulants, notamment pour la gestion des fins de course. En effet, si, pour une raison ou pour une autre, l'arrêt du moteur a été commandé très près de cette fin de course et que l'on vient à le redémarrer en direction de ce dernier, le déphasage mesuré entre les paramètres précités atteint très vite sa valeur maximale (ou minimale selon les paramètres précisément retenus) de sorte que l'on ne détecte aucune, voire guère, de variation et il est impératif que l'arrêt intervienne sur la détection d'une valeur seuil de ce déphasage.

Or, comme cela ressortait déjà des explications qui précèdent, notamment lorsqu'il a été fait allusion aux arrêts intempestifs d'un moteur, c'est cette valeur seuil qui pose problème. En effet, le seuil à prendre en compte, même si pour la mesure du déphasage l'on retient des paramètres internes au moteur, n'est pas le même et, donc, varie selon les conditions de fonctionnement du moteur, notamment sa température et les fluctuations au niveau de son alimentation électrique.

Ainsi, dans les conditions extrêmes qui viennent d'être exposées si le seuil de déphasage, destiné à engendrer l'arrêt du moteur, a été défini trop haut, (ou trop bas selon les paramètres pris en compte) il peut y avoir rupture du tablier du volet roulant avant qu'intervienne cet arrêt.

De plus, dans une telle application à des volets roulants, il est impossible de définir ce seuil avec une marge de sécurité trop importante. En effet lors de l'enroulement du tablier, ce moteur est amené à produire, durant la phase initiale, un couple important pour vaincre tout le poids de ce tablier. Aussi, en prenant trop de précautions, l'on prend le risque qu'il se produise de manière fréquente des arrêts intempestifs durant ces phases d'enroulement.

A cela il convient d'ajouter qu'il est connu, par le document FR-A-2.749.714, un système de commande de moteur à base de microprocesseurs comportant une détection de différence de phase prenant en compte, pour cette mesure de déphasage, d'une part, la tension d'alimentation du moteur asynchrone à bobinage principal et auxiliaire et, d'autre part, la tension aux bornes de ces derniers, soit dans le cas d'un moteur à condensateur, la tension aux bornes de celui-ci.

Le problème posé, ici, consiste à détecter qu'un moteur asynchrone, notamment d'un compresseur, s'est mis en rotation après alimentation et, par conséquent, n'est pas resté bloqué. Parallèlement, il s'agit encore de gérer l'alimentation de l'enroulement principal et de l'enroulement auxiliaire pendant les phases de démarrage et de rotation constantes du moteur.

Dans la mesure où en situation de blocage le déphasage entre la tension d'alimentation du moteur et la tension entre l'enroulement principal et l'enroulement secondaire est voisine de zéro, la solution à ce problème consiste, selon ce document antérieur, à détecter, au-delà d'un temps déterminé après le démarrage, que le déphasage entre ces tensions est supérieur à une valeur seuil. Il est évident, dans ce cas, que ce seuil peut être déterminé avec une très grande marge de sécurité tenant compte, notamment, des variables, telles que la fluctuation de la tension d'alimentation ou encore température de fonctionnement du moteur, etc... Par conséquent, il n'est pas question de faire travailler le moteur proche de ses limites, mais l'on veut s'assurer qu'il a atteint une vitesse supérieure à sa vitesse de coupure pour entretenir son fonctionnement, cela dans un laps de temps bien défini.

Si l'on tient compte à présent des hypothèses suivantes, qui découlent des explications qui précèdent et de l'état de la technique connu :
- le déphasage entre des paramètres d'un moteur, tensions et/ou courants, tend, selon le cas, vers une valeur maximale ou minimale à l'approche de sa charge maximale ;
- que le déphasage des paramètres que sont la tension d'alimentation du moteur et celle aux bornes du condensateur est plus particulièrement dépendant des conditions de fonctionnement de ce moteur ;
il semble évident que l'homme du métier serait tenté de s'écarter de cette solution proposée par ce document FR-2.749.714 pour, non pas constater qu'un moteur asynchrone s'est mis en rotation, mais pour surveiller ce moteur à ses limites, donc constater une surcharge et gérer par ce biais les fins de courses de systèmes de fermeture que sont des volets roulants.

C'est en allant à l'encontre de ces préjugés et dans le cadre d'une première démarche inventive qu'il a été imaginé, malgré tout, de retenir le déphasage de ces tensions d'alimentation du moteur et aux bornes du condensateur pour détecter avec précision une surcharge de ce moteur, ce qui, plus est, en ne tenant compte que de la variation de ce déphasage.

C'est dans ces conditions que l'on a pu constater que celui-ci, à l'approche du couple maximum du moteur, s'inverse brutalement au lieu de tendre, lui aussi, vers une valeur maximale. De plus, ce déphasage passe par une valeur inférieure à celle correspondant aux conditions de blocage du moteur ou encore lorsque celui-ci tourne à vide.

Par conséquent, si l'on tient compte de la variation de ce déphasage, consistant, mathématiquement, à suivre l'évolution de la dérivée de la courbe ; déphasage par rapport au couple moteur ; cette dérivée passe, successivement, par un pic positif, puis par un pic négatif avant de s'annuler.

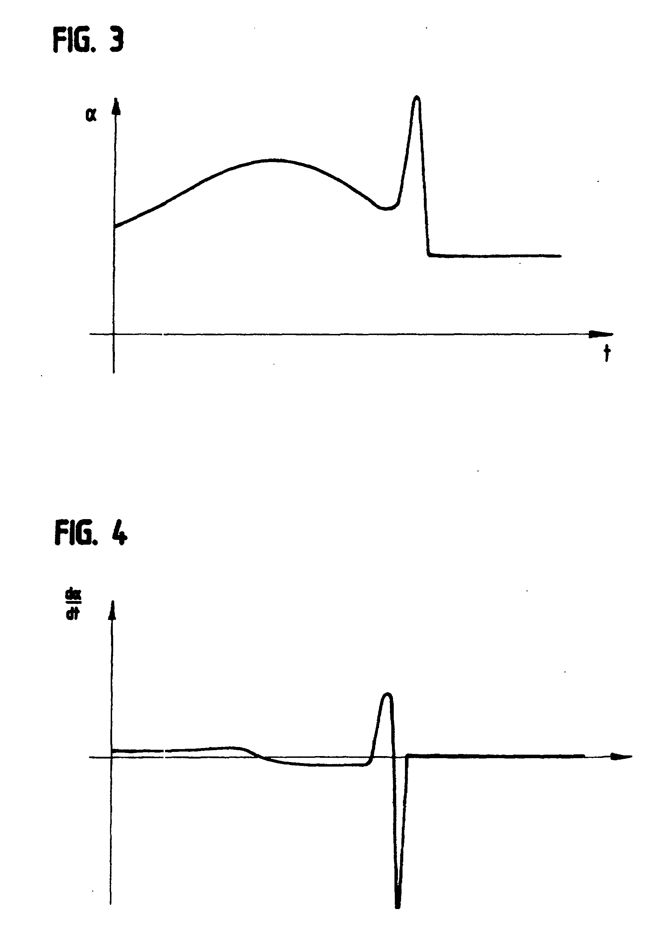

Ceci a été représenté dans les figures 3 et 4.

Si dans le cadre des mesures de déphasage réalisées jusqu'à présent, tenant compte d'autres paramètres, l'on n'a pas pu apercevoir ce pic négatif au niveau de cette dérivée, la présence de ce dernier permet, de manière surprenante, de s'affranchir de la détection d'un seuil absolu.

Plus précisément, comme cela avait été expliqué plus haut, en cas de redémarrage d'un moteur tout près d'une fin de course, l'on ne peut se contenter de suivre l'évolution du déphasage en fonction du temps pour détecter cette fin de course, car le pic positif de la dérivée est quasi impossible à détecter dans ces conditions particulières. La définition d'un seuil absolu pour, en cas de dépassement, arrêter le moteur est alors indispensable.

A l'inverse, le suivi de l'évolution du déphasage, dans ces mêmes conditions, entre la tension secteur et la tension aux bornes du condensateur permet de détecter, dans tous les cas, le pic négatif intervenant avant blocage, donc surcharge du moteur, et donc de couper à temps l'alimentation de celui-ci.

En fin de compte, au travers de la présente invention il a été recherché une solution qui, tout en étant moins coûteuse dans sa réalisation, soit en mesure de répondre au problème précité.

Ainsi, l'invention concerne un dispositif de commande d'arrêt du fonctionnement d'un moteur asynchrone monophasé à condensateur, notamment pour système de fermeture de type volet roulant comportant des moyens de mesure du déphasage de la tension d'alimentation aux bornes du moteur et de la tension aux bornes du condensateur, ainsi que des moyens de commande d'arrêt à même de couper l'alimentation du moteur en cas de détection d'un déphasage déterminé caractérisé par le fait qu'aux moyens de mesure du déphasage entre la tension aux bornes du moteur et la tension aux bornes du condensateur, sont associés des moyens de détection d'une variation de ce déphasage supérieur et/ou inférieur à des valeurs seuils prédéfinies pour commander la coupure de l'alimentation du moteur au travers desdits moyens de commandes d'arrêt.

En fin de compte, le dispositif selon l'invention, tout en tenant compte, pour la mesure du déphasage, de la tension d'alimentation du moteur et de celle aux bornes du condensateur, est insensible aux variations brutales de la tension du secteur, mais en outre, s'avère de conception simplifiée donc d'un coût de revient moindre.

Dans la suite de la description il est donné un exemple de réalisation de la présente invention par ailleurs représenté dans le dessin joint en annexe dans lequel :
- la figure 1 est une représentation du schéma synoptique du dispositif de commande d'arrêt selon l'invention ;
- la figure 2 est une représentation graphique schématisée de l'évolution de l'angle de déphasage entre la tension d'alimentation du moteur et celle aux bornes du condensateur par rapport à la charge de ce moteur.
- la figure 3 est une représentation graphique schématisée de l'évolution de l'angle de déphasage en fonction du temps dans le cas d'un moteur d'entraînement d'un volet roulant, ceci pendant la phase d'enroulement du tablier de ce volet roulant ;
- la figure 4 est la représentation graphique schématisée de la dérivée de la courbe correspondant à la figure 3.

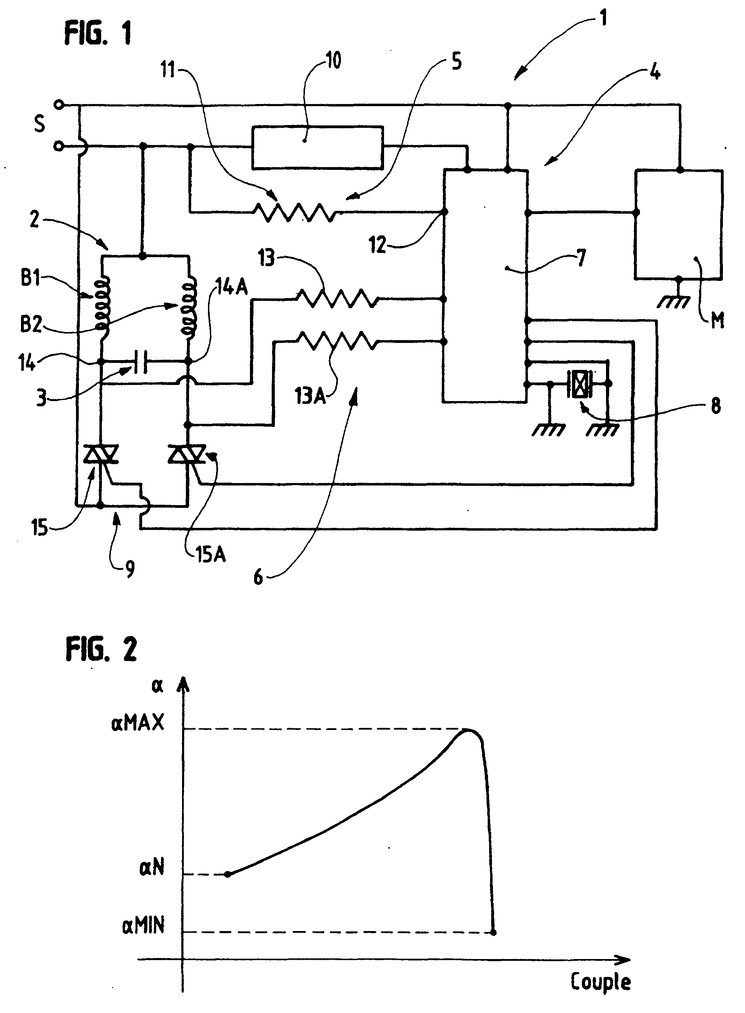

La présente invention est relative à un dispositif 1 de commande d'arrêt du fonctionnement d'un moteur asynchrone 2 à condensateur 3 dont un mode de réalisation a été illustré dans la figure 1 du dessin ci-joint.

Ainsi, ce moteur 2 se distingue par un bobinage principal B1 et un bobinage auxiliaire B2, d'une part raccordés au commun 4 du secteur S et, d'autre part, reliés entre eux par le condensateur de déphasage 3 à même de créer le champ tournant pour la commande en rotation du rotor.

Quant au dispositif de commande d'arrêt 1, il a pour but de détecter une éventuelle surcharge du moteur 2 et/ou une arrivée en fin de course en vue de commander, de manière quasi instantanée, l'arrêt de son fonctionnement.

Dans ce but et selon l'invention, le dispositif de commande d'arrêt 1 comporte des moyens de mesure du temps de retard et, donc, du déphasage, entre la tension U₁ d'alimentation du moteur 2, donc la tension secteur S, et la tension U₂ aux bornes du condensateur de déphasage 3.

Tout particulièrement, les moyens de mesure 4, comme illustré dans la figure 1, comportent des moyens de détection 5 du passage à un seuil prédéterminé, préférentiellement à zéro, de la tension secteur U₁, ainsi que des moyens de détection 6 du passage à un seuil prédéterminé, préférentiellement à zéro, de la tension U₂ aux bornes du condensateur 3. Ces moyens de mesure comportent encore un microprocesseur 7, relié à une horloge 8 apte à mesurer le temps séparant le passage à zéro de la tension U₁ par rapport au passage à zéro de la tension U₂.

Selon l'invention, à ces moyens de mesure 4 sont encore associés des moyens de détection d'une variation absolue de ce déphasage qui, si cette variation est supérieure et/ou inférieure des valeurs seuils prédéfinies, conduit ces moyens de détection à commander la coupure de l'alimentation électrique du moteur au travers de moyens de commande d'arrêt 9 appropriés.

Substantiellement, ces moyens de détection sont définis par le microprocesseur 7 et consistant à comparer un temps de déphasage mesuré par les moyens de mesure 4 à une ou plusieurs mesures de temps de déphasage précédentes. Si la différence est supérieure ou inférieure aux valeurs seuils données connues en mémoire M du microprocesseur 7, celui-ci vient à agir sur les moyens de commande d'arrêt 9.

En contrôlant, de cette manière, l'évolution du déphasage, on suit la courbe dérivée de la courbe de déphasage entre la tension U₁ et la tension U₂ en fonction du temps. Les figures 3 et 4 illustrant l'évolution de ces courbes correspondent plus particulièrement aux mesures de déphasage effectuées sur un moteur asynchrone monophasé à condensateur d'un volet roulant au cours de l'enroulement de son tablier, partant de la position totalement déployée de ce dernier.

Tout particulièrement, le dispositif 1 comporte une alimentation basse tension à courant continu 10 à même d'intervenir dans le cadre des commandes logiques reçues ou émises par le microprocesseur 7.

Quant aux moyens de détection 5, ils consistent, essentiellement, en une ou une série de résistances chutrices 11 à même d'écrêter le signal sinusoïdal correspondant à la tension U₁ du secteur S en vue de transformer celui-ci en un signal assimilable carré d'amplitude limitée, compatible avec le ou les composants électroniques, en particulier avec le microprocesseur 7.

En fait, ce signal, entrant au niveau de la borne 12 de ce microprocesseur 7 est assimilable à un signal logique, du type 0 ou 1, permettant à ce microprocesseur 7 de détecter le passage à zéro de la tension U₁ du secteur S.

Quant aux moyens de détection 6, ils consistent, là encore, essentiellement, en une ou plusieurs résistances chutrices 13, 13A raccordées à l'une ou l'autre des bornes 14, 14A du condensateur 3, selon le sens de rotation du moteur 2, permettant de délivrer, au microprocesseur 7 un signal sensiblement carré d'amplitude compatible avec les composants électroniques, en particulier avec le microprocesseur 7 pour une interprétation sous forme logique de type 0 ou 1 de ce signal.

Finalement, au travers de ces signaux de forme carrée délivrés par lesdits moyens de détection 5, 6, il est aisé, à ce microprocesseur 7 et grâce à l'horloge 8, de mesurer, à chaque alternance, le retard entre la tension U₂ aux bornes du condensateur 3 et la tension U₁ du secteur et de le comparer à un temps correspondant à une valeur absolue, préférentiellement, paramétrable au niveau de la mémoire M.

Toutefois, il est fait observer que pendant les phases transitoires correspondant au démarrage du moteur 2, il se produit des fluctuations au niveau de ce déphasage. Aussi, de manière à éviter que le dispositif ne provoque des arrêts intempestifs du moteur 2, il est prévu que les moyens de mesure 4 du temps de retard n'interviennent pas pendant ces périodes transitoires de démarrage.

Plus exactement les mesures ne sont effectuées ou encore ne sont interprétées par le microprocesseur 7 qu'après écoulement d'un temps donné en mémoire M assimilable à cette phase de démarrage du moteur 2, et correspondant, préférentiellement, à un nombre déterminé d'alternances de la tension U₁.

Quant à l'arrêt du moteur 2 sous l'influence du microprocesseur 7 elle a lieu par l'intermédiaire de moyens de commande 9 sous forme de deux triacs 15, 15A venant raccorder, lorsque l'un d'eux est fermé, l'une ou l'autre des bornes 14, 14A du condensateur 3 au secteur S et, contrairement, lorsqu'ils sont tous deux ouverts assurant la commande d'arrêt de fonctionnement du moteur 2.

En fait, l'on comprend que selon que l'un ou l'autre des triacs 15, 15A est commandé en fermeture par le microprocesseur 7, le moteur 2 tourne dans un sens ou dans le sens inverse. Si une telle commande par triac nécessite, effectivement, de dédoubler la ou les résistances chutrices 13, 13A permettant de délivrer au microprocesseur 7 un signal sensiblement carré, représentatif de la tension U₂ aux bornes du condensateur 3, elle évite l'usage d'un relais RT comme cela est décrit dans le document EP-A-0.720.269, d'un coût de revient largement supérieur.

On se reportera, à présent, tout particulièrement à la figure 2 correspondant à une représentation graphique de l'évolution, en abscisse, du couple moteur par rapport, en ordonnée, de l'angle α du déphasage entre la tension secteur U₁ et la tension U₂ aux bornes du condensateur 3.

Comme cela est visible sur cette figure 2, l'angle de déphasage a croît progressivement avec l'évolution de la charge du moteur jusqu'à atteindre une valeur maximale α max, avant que cet angle ne diminue brutalement jusqu'à atteindre une valeur minimale α min, qui est, en fait, inférieure à l'angle de déphasage αn mesuré lorsque le moteur 2 tourne sensiblement à vide mais aussi à la valeur de ce déphasage en cas de blocage de ce moteur. Ainsi, même à supposer que la valeur α max soit variable en fonction des caractéristiques du moteur et, notamment, de la température du fonctionnement de celui-ci, non seulement il est possible d'assurer l'arrêt du fonctionnement du moteur en cas de variation brutale de l'angle de déphasage α lorsqu'on se situe sur la partie croissante de la courbe, entre αn et α max, mais, en outre, cet arrêt du moteur 2 peut encore intervenir lorsque l'angle de déphasage α tend vers une valeur distinctive, inférieure à la valeur normale de cet angle de déphasage donc lorsque la courbe dérivée décrit un pic négatif comme visible sur la figure.

De plus, dans la mesure où, au-delà de la valeur maximale de cet angle de déphasage α, l'inversion de sens de la courbe se produit brutalement, l'on peut encore imaginer arrêter le moteur 2 au travers de la détection de cette variation brutale, avant même ce pic négatif, dans tous les cas avant blocage du moteur.

En fait, tel que cela ressort des explications qui précèdent, non seulement, les données que constitue la tension U₁ aux bornes du secteur comparée à la tension U₂ aux bornes du condensateur 3 sont parfaitement exploitables pour la commande d'arrêt du moteur 2, ceci contrairement à ce qu'à pu penser l'Homme du Métier jusqu'à présent, mais, en outre, cela permet la conception d'un dispositif de commande d'arrêt simplifié et, donc, d'un coût de revient moindre.

L'invention trouvera son application plus particulièrement dans le cadre de la gestion du fonctionnement du moteur d'entraînement pour systèmes de fermeture dans le domaine du bâtiment, tels que des volets roulants. Ainsi, ce dispositif s'avère d'un intérêt tout spécialement pour gérer les fins de course d'ouverture et de fermeture de ces systèmes.

## Revendications

1. Dispositif de commande d'arrêt du fonctionnement d'un moteur (2) asynchrone monophasé à condensateur (3), notamment pour système de fermeture de type volet roulant, comportant des moyens de mesure (4) du déphasage de la tension U₁ d'alimentation du moteur (2) et de la tension U₂ aux bornes du condensateur (3), ainsi que des moyens de commande d'arrêt (9) à même de couper l'alimentation du moteur (2) en cas de détection d'un déphasage déterminé, **caractérisé par le fait qu'**aux moyens de mesure (4) du déphasage entre la tension U₁ d'alimentation du moteur (2) et la tension U₂ aux bornes du condensateur (3), sont associés des moyens de détection d'une variation de ce déphasage, supérieure et/ou inférieure des valeurs seuils prédéfinies pour commander la coupure de l'alimentation du moteur (2) au travers desdits moyens de commande d'arrêt (9).

2. Dispositif de commande d'arrêt selon la revendication 1, **caractérisé par le fait que** les moyens de mesure (4) comportent des moyens de détection (5) du passage à un seuil prédéterminé, préférentiellement à zéro, de la tension U₁ aux bornes du moteur (2), ainsi que des moyens de détection (6) du passage à un seuil prédéterminé, préférentiellement à zéro, de la tension U₂ aux bornes du condensateur (3), ledit dispositif (1) comportant, encore, un microprocesseur (7) relié à une horloge (8) apte à mesurer le temps séparant le passage à zéro de la tension U₁ par rapport au passage à zéro de la tension U₂ en vue de déterminer le déphasage pour commander l'arrêt de fonctionnement du moteur (2), par l'intermédiaire desdits moyens de commande (9), au cas où ledit temps de déphasage comparée à une ou plusieurs mesures de temps de déphasage précédentes présente une variation supérieure ou inférieure à des valeurs seuils données, connues en mémoire (M) du microprocesseur (7).

3. Dispositif de commande d'arrêt selon la revendication 2, **caractérisé par le fait que** les moyens de détection (5) du passage à un seuil prédéterminé, préférentiellement à zéro, de la tension secteur U₁ consiste en une ou une série de résistance chutrice (11) à même d'écrêter le signal sinusoïdal correspondant à la tension U₁ du secteur (S) en vue de transformer celui-ci en un signal sensiblement carré, assimilable à un signal logique du type 0 ou 1 et d'amplitude limitée, compatible avec le ou les composants électroniques, en particulier avec le microprocesseur (7).

4. Dispositif de commande d'arrêt selon la revendication 2, **caractérisé par le fait que** les moyens de détection (6) du passage à un seuil prédéterminé, préférentiellement à zéro de la tension U₂ aux bornes du condensateur (3) consistent en une ou plusieurs résistances chutrices (13, 13A) raccordées à l'une ou l'autre des bornes (14, 14A) du condensateur (3), selon le sens de rotation du moteur (2), permettant de délivrer, au microprocesseur (7), un signal sensiblement carré, apte à être interprété sous forme logique de type 0 ou 1 et d'amplitude compatible avec le ou les composants électroniques, en particulier avec le microprocesseur (7).

5. Dispositif de commande d'arrêt selon l'une quelconque des revendications précédentes, **caractérisé par le fait que** les moyens de commande d'arrêt (9) sont définis par deux triacs (15, 15A) venant raccorder, lorsque l'un d'eux est commandé en fermeture par l'intermédiaire du microprocesseur (7), l'une ou l'autre des bornes (14, 14A) du condensateur (3) au secteur (S) et, contrairement, assurant la commande d'arrêt du fonctionnement du moteur (2) lorsqu'ils sont tous deux ouverts.

6. Application du dispositif selon l'une quelconque des revendications précédentes pour la commande d'arrêt du fonctionnement d'un moteur d'entraînement d'un système de fermeture du type volet roulant en fin de course d'ouverture et/ou fermeture dudit système.

## Patentansprüche

1. Vorrichtung zum Anhalten einer einphasigen Asynchronmotor (2) mit Kondensator (3), nämlich für ein Verschließsystem der Art eines Rolladens, umfassend Mittel zum Messen (4) der Phasenverschiebung zwischen der Versorgungsspannung U1 des Motors (2) und der Spannung U2 an den Anschlußklemmen des Kondensators (3), sowie Anhaltmittel (9), die geeignet sind, die Stromversorgung des Motors (2) zu unterbrechen, falls eine bestimmte Phasenverschiebung festgestellt wird, **dadurch gekennzeichnet, daß** den Mitteln zum Messen (4) der Phasenverschiebung zwischen der Versorgungsspannung U1 des Motors (2) und der Spannung U2 an den Anschlußklemmen des Kondensators (3) Mittel zum Feststellen einer Änderung dieser Phasenverschiebung, die höher oder niedriger ist als vorbestimmte Schwellenwerte zum Unterbrechen der Stromversorgung des Motors (2) über die genannten Anhaltmittel (9), zugeordnet sind.

2. Vorrichtung zum Anhalten nach Anspruch 1, **dadurch gekennzeichnet, daß** die Mittel zum Messen (4) Mittel zum Feststellen (5) des Druchgangs an einer vorbestimmten Schwelle, vorzugsweise des Nulldurchgangs, der Spannung U1 an den Anschlußklemmen des Motors (2), sowie Mittel zum Feststellen (6) des Druchgangs an einer vorbestimmten Schwelle, vorzugsweise des Nulldurchgangs, der Spannung U2 an den Anschlußklemmen des Kondensators (3) umfassen, wobei die genannte Vorrichtung (1) ebenfalls einen Mikroprozeßor (7) umfaßt, der mit einer Uhr (8) verbunden ist, geeignet, die Zeitperiode zwischen dem Nulldurchgang der Spannung U1 und dem Nulldurchgang der Spannung U2 zu messen, um die Phasenverschiebung zu bestimmen, um das Anhalten des Motors (2) über die genannten Steuermittel (9) zu steuern, falls diese Phasenverschiebungszeit im Vergleich zu einer oder mehreren vorgehenden Phasenverschiebungszeitmessungen eine höhere oder niedrigere Änderung aufweist als gegebene Schwellenwerte, die im Speicher (M) des Mikroprozeßors (7) bekannt sind.

3. Vorrichtung zum Anhalten nach Anspruch 2, **dadurch gekennzeichnet, daß** die Mittel zum Feststellen (5) des Druchgangs an einer vorbestimmten Schwelle, vorzugsweise des Nulldurchgangs, der Spannung U1 aus einem oder einer Reihe von Abfallwiderständen (11) bestehen, geeignet, das der Spannung U1 des Stromnetzes (S) entsprechende Sinussignal zu begrenzen, um es in ein im wesentlichen Rechtecksignal umzuwandeln, das einem mit dem bzw. den elektronischen Bauteilen, insbesondere mit dem Mikroprozeßor (7) vereinbaren Logik-Signal der Art 0 oder 1 einer begrenzten Amplitude im wesentlichen ähnlich ist.

4. Vorrichtung zum Anhalten nach Anspruch 2, **dadurch gekennzeichnet, daß** die Mittel zum Feststellen (6) des Druchgangs an einer vorbestimmten Schwelle, vorzugsweise des Nulldurchgangs, der Spannung U2 an den Anschlußklemmen des Kondensators (3) aus einem oder einer Reihe von Abfallwiderständen (13, 13A) bestehen, die je nach der Drehrichtung des Motors (2) an der einen oder der anderen der Anschlußklemmen (14, 14A) des Kondensators (3) angeschlossen sind und es erlauben, dem Mikroprozeßor (7) ein im wesentlichen Rechtecksignal zu liefern, das geeignet ist, in einer Logik-Form der Art 0 oder 1 interpretiert zu werden und eine mit dem bzw. den elektronischen Bauteilen, insbesondere mit dem Mikroprozeßor (7) vereinbare Amplitude aufweist.

5. Vorrichtung zum Anhalten nach irgendeinem der vorgehenden Ansprüche, **dadurch gekennzeichnet, daß** die Anhaltmittel (9) durch zwei Triacs (15, 15A) definiert sind, die, wenn das Schließen eines dieser beiden über den Mikroprozeßor (7) gesteuert wird, die eine oder die andere der Anschlußklemmen (14, 14A) des Kondensators (3) mit dem Stromversorgungsnetz (S) verbindet und, im Gegenteil, das Anhalten des Motors (2) sichern, wenn beide geöffnet sind.

6. Anwendung der Vorrichtung nach irgendeinem der vorgehenden Ansprüche zum Anhalten eines Antriebsmotors eines Verschließsystems der Art eines Rolladens am Ende des Öffnungs- und/oder Schließhubes des genannten Systems.

## Claims

1. Stop control device for a single-phase asynchronous motor (2) with capacitor (3), namely for a closing system such as a roller blind, including means for measuring (4) the phase shift between the supply voltage U1 to the motor (2) and the voltage U2 at the terminals of the capacitor (3), as well as stop control means (9) capable of interrupting the current supply to the motor (2) in the event a determined phase shift is detected, **characterised in that** with the means for measuring (4) the phase shift between the supply voltage U1 to the motor (2) and the voltage U2 at the terminals of the capacitor (3) are associated means for detecting a change of this phase shift larger or smaller than predefined threshold values for controlling the interruption of the current supply to the motor (2) through said stop control means (9).

2. Stop control device according to claim 1, **characterised in that** the measuring means (4) include means for detecting (5) the passage at a predetermined threshold, preferably at zero, of the voltage U1 at the terminals of the motor (2), as well as means for detecting (6) the passage at a predetermined threshold, preferably at zero, of the voltage U2 at the terminals of the capacitor (3), said device (1) also including a microprocessor (7) connected to a clock (8) capable of measuring the period of time between the passage at zero of the voltage U1 and the passage at zero of the voltage U2, with a view to determining the phase shift for controlling the stop of the motor (2), through said control means (9), in the event this phase-shift time, compared to one or several preceding phase-shift time measurements, exhibits a change larger or smaller than given threshold values that are known in the memory (M) of the microprocessor (7).

3. Stop control device according to claim 2, **characterised in that** the means for detecting (5) the passage at a predetermined threshold, preferably at zero, of the voltage U1 consist of one or a series of dropping resistors (11) capable of chopping the sine-wave signal corresponding to the voltage U1 of the network (S), with a view to converting it into a substantially square signal, similar to a logical signal of the type 0 or 1 and with a limited amplitude compatible with the electronic component or components, in particular with the microprocessor (7).

4. Stop control device according to claim 2, **characterised in that** the means for detecting (6) the passage at a predetermined threshold, preferably at zero, of the voltage U2 at the terminals of the capacitor (3) consist of one or several dropping resistors (13, 13A) connected to either one of the terminals (14, 14A) of the capacitor (3), according to the direction of rotation of the motor (2), allowing supplying to the microprocessor (7) a substantially square signal capable of being interpreted in a logical form of the type 0 or 1 and with an amplitude compatible with the electronic component or components, in particular with the microprocessor (7).

5. Stop control device according to any of the preceding claims, **characterised in that** the stop control means (9) are defined by two triacs (15, 15A) connecting, when the closing of either one of them is controlled through the microprocessor (7), either one of the terminals (14, 14A) of the capacitor (3) to the network (S) and, on the other hand, ensuring the control for stopping the motor (2) when both of them are open.

6. Application of the device according to any of the preceding claims for controlling the stop of a driving motor of a closing system such as a roller blind at the opening and/or closing travel end of said system.
